# EUROPEAN PATENT SPECIFICATION

(11) **EP 4 389 562 B1**
(45) Date of publication and mention of the grant of the patent: **04.02.2026**
(21) Application number: 22215245.6
(22) Date of filing: 21.12.2022
(51) Int. Cl.: B62B 3/00, B62B 5/00

(54) **REMOTE-CONTROLLED PERSONAL CART SYSTEM FOR TRANSPORTING ITEMS**
FERNGESTEUERTES PERSONENWAGENSYSTEM ZUM TRANSPORT VON GEGENSTÄNDEN
SYSTÈME DE CHARIOT PERSONNEL TÉLÉCOMMANDÉ POUR LE TRANSPORT D'ARTICLES

(43) Date of publication of application: 26.06.2024
(73) Proprietor: Shop-E One OÜ, 10128 Tallinn (EE)
(72) Inventor: Wagner, Marc, Tallinn (EE)
(74) Representative: Moosedog Oy

(56) References cited:
- KR-A- 20190 031 078
- US-A1- 2013 098 700
- US-A1- 2014 107 868
- US-A1- 2018 057 034
- US-A1- 2021 331 729

## Description

### TECHNICAL FIELD

The present invention relates to remote-controlled personal cart systems for transporting items.

### BACKGROUND

With the advancement in technology, the shopping styles of people have been changing rapidly. For example, the Covid-19 quarantines led to an increase in sedentary or isolated lives. Moreover, during such times both physical activities and the mental health of the people were badly affected. Nowadays, people are facing challenges and a lack of motivation in completing daily tasks such as running errands for food and basic needs thereof.

Conventionally, the people used to carry a bag while going shopping (such as grocery shopping) for carrying a purchased product. The purchased product when carried in the bag increases the weight of the bag, thereby making it difficult to be carried home without a car. Moreover, vulnerable people such as elderly people and handicapped people might find a trouble to carry even a few purchased products from one place to another.

Normally, the people use a shopping cart, lead the fully packed shopping cart to a parking lot and load all the purchased products into the car. However, many times driving the car is uneconomical. In recent times, people have started using e-commerce platforms that employ a courier service for shopping. However, such practices are expensive and are not preferred by people who are living an active lifestyle. Moreover, such practices fail to resolve other societal issues such as loneliness, autonomy, physical, and mental health of the people. Typically, a shopping trolley bag is used. However, the shopping trolley bag requires to be pushed or pulled by applying physical force, thereby making it inconvenient for use.

A patent document US20180057034 discloses a cart, which is continuously controlled by monitoring input from proximity sensors to approximate the user's lateral and longitudinal positions behind the cart. Based on this approximation, the system adjusts the cart's position to maintain alignment with the user, ensuring the carte stays centred relative to the user's movement.

A patent document US20130098700 discloses foldable cart assembly, which is equipped with a user tracking system that enables it to follow the user during movement across a field. The system utilizes a combination of ultrasound and RF sensors, which communicate with a remote handset carried by the user. These sensors provide the cart's central processor with timing, direction, and distance data, allowing it to control individual electric motors and adjust the direction and speed of the cart's wheels accordingly.

A patent document US20210331729 introduces a hands-free, electric-powered utility cart that is controlled through voice commands and by tracking an electronic device or chip carried by the user. Additional commands can direct the cart to follow on the user's right or left side. The cart's standardized chassis is adaptable to various baskets designed for specific purposes, such as shopping, tools, beach trips, golf equipment, or even a baby carriage.

Additionally, some industries (such as restaurants, logistic providers and healthcare) employ a robot for delivering the purchased products to the desired location. However, such robots need to be trained and are uncontrollable between a large group of people. Moreover, such robots fail to move on complicated surfaces. Furthermore, some autonomous devices are used for carrying the purchased products over short distances. However, such autonomous devices are a complicated and expensive technology.

### SUMMARY

The present invention seeks to provide a remote-controlled personal cart systems for transporting items. An aim of the present disclosure is to provide a solution that overcomes the problems encountered in prior art.

In an aspect, an embodiment of the present invention provides a remote-controlled personal cart system for transporting items, the remote-controlled personal cart system comprising
- a cart comprising
   - a base comprising
      - at least four wheels comprising at least two driving wheels on the front and at least two back wheels,
      - at least one supporting wheel configured to support the cart, when driving on an uneven ground, wherein the at least one supporting wheel is located in at least one location selected from between the at least two driving wheels or between the at least two back wheels,
      - a battery,
      - a receiver,
      - at least one motor, and
      - at least one sensor system operable to detect obstacles;
   - a basket detachably placed on the base, the basket comprising an empty space configured to accommodate the items; and
- a remote-control device for controlling a movement and a speed (v1) of the cart, the remote-control device comprising a transmitter and at least one sensor element operable to measure a distance (L) between the remote-control device and the cart,
and wherein the remote-control device is operable to control the speed of the cart to keep the distance (L) within a range from 1 meter up to 3 meters during the movement of the cart.

Embodiments of the present invention substantially eliminate or at least partially address the aforementioned problems in the prior art and enable the transportation of items in a fast and efficient manner using the remote-controlled personal cart system. Moreover, the system is user-friendly and can be used by all sorts of users irrespective of age and physical condition thereof. Furthermore, the system promotes pedestrian mobility, independence and autonomy, thereby addressing a public health concern. Additionally, the system is robust, cost-effective and environmentally friendly.

Additional aspects, advantages, features and objects of the present disclosure would be made apparent from the drawings and the detailed description of the illustrative embodiments construed in conjunction with the appended claims that follow.

It will be appreciated that features of the present invention are susceptible to being combined in various combinations without departing from the scope of the present invention as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present invention, exemplary constructions of the invention are shown in the drawings. However, the present invention is not limited to specific methods and instrumentalities disclosed herein. Moreover, those skilled in the art will understand that the drawings are not to scale. Wherever possible, like elements have been indicated by identical numbers.

Embodiments of the present invention will now be described, by way of example only, with reference to the following diagrams wherein:

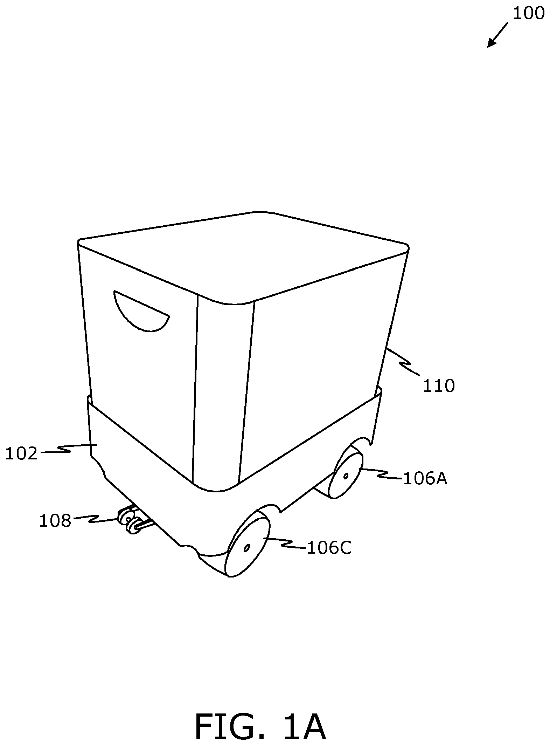

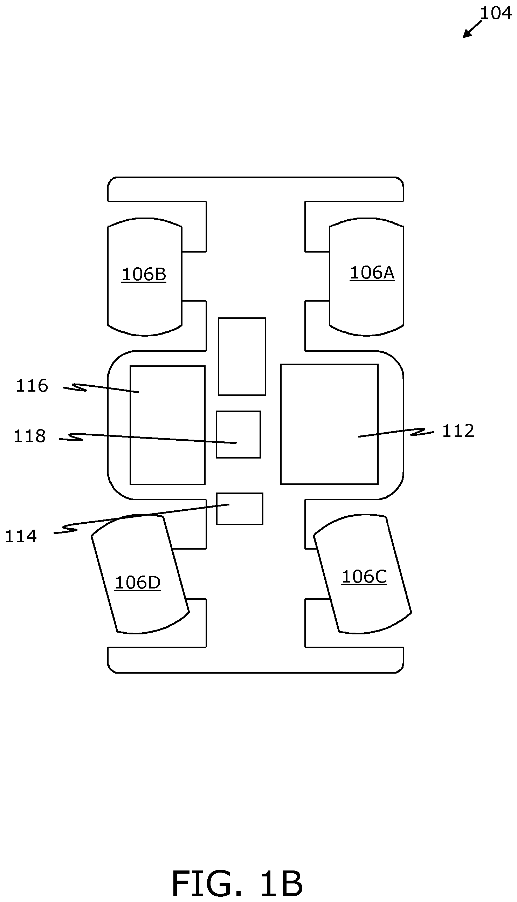

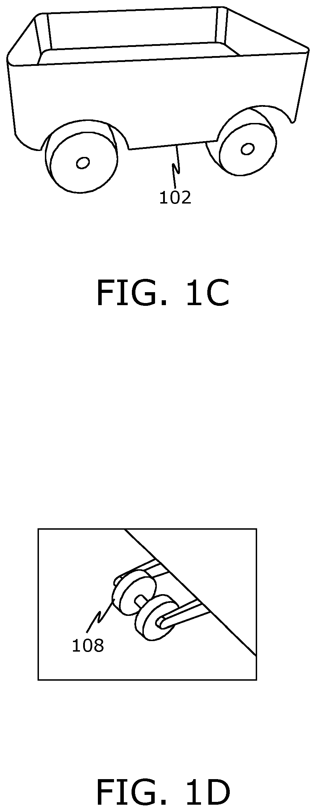

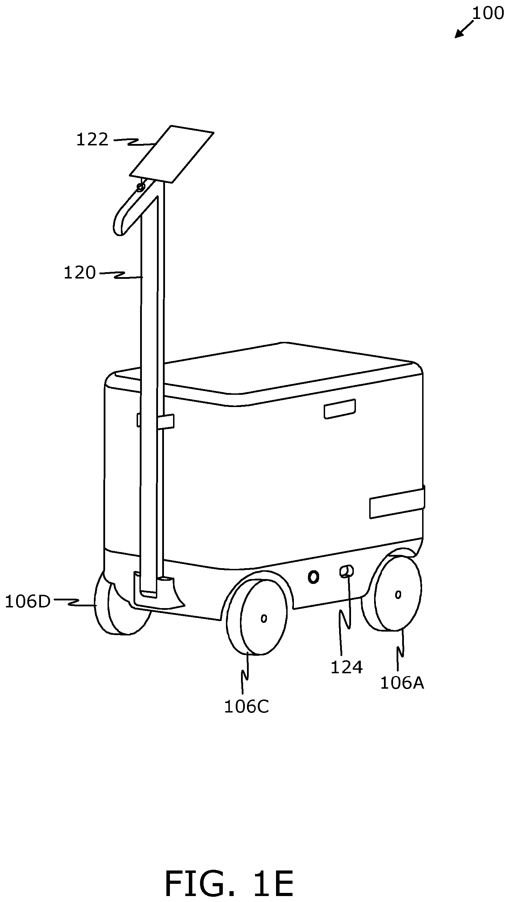

FIGs. 1A, 1B, 1C, 1D and 1E are schematic illustrations of a remote-controlled personal cart system for transporting items, in accordance with different embodiments of the present invention.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present invention and ways in which they can be implemented. Although some modes of carrying out the present invention have been disclosed, those skilled in the art would recognize that other embodiments for carrying out or practicing the present invention are also possible.

In an aspect, an embodiment of the present invention provides a remote-controlled personal cart system for transporting items, the remote-controlled personal cart system comprising
- a cart comprising
   - a base comprising
      - at least four wheels comprising at least two driving wheels on the front and at least two back wheels,
      - at least one supporting wheel configured to support the cart, when driving on an uneven ground, wherein the at least one supporting wheel is located in at least one location selected from between the at least two driving wheels or between the at least two back wheels,
      - a battery,
      - a receiver,
      - at least one motor, and
      - at least one sensor system operable to detect obstacles;
   - a basket detachably placed on the base, the basket comprising an empty space configured to accommodate the items; and
- a remote-control device for controlling a movement and a speed (v1) of the cart, the remote-control device comprising a transmitter and at least one sensor element operable to measure a distance (L) between the remote-control device and the cart,
and wherein the remote-control device is operable to control the speed of the cart to keep the distance (L) within a range from 1 meter up to 3 meters during the movement of the cart.

The present invention provides the aforementioned remote-controlled personal cart system. It will be appreciated that the system is user-friendly and possesses a simple design. Moreover, the system can operate smoothly on both even and uneven surfaces. Furthermore, the system is environmentally friendly. Beneficially, the system employs at least one sensor for preventing accidents thereof. Advantageously, the system employs a remote control device for controlling a movement thereof accurately. Furthermore, the remote-controlled personal cart system is sustainable and reduces the carbon footprint. It will be appreciated that the system is more effective than the conventional modes of transportation. Beneficially, the system is used for micro-mobility and covering short-range distances.

The term *"remote-controlled personal cart"* as used herein refers to a robot that is controlled from a distance using a hardware device (such as a transmitter) by a user. The user may be an operator of the system, an owner of the system, a vulnerable person, an elderly, a handicapped person, or any other person using the system. It will be appreciated that the remote-controlled personal cart is overseen by the user who could always step in to take over control at any time remotely, thus negating any potential safety concerns. In this regard, the remote-controlled personal cart system includes various components (such as cart, base, remote control device, and so forth) that work in conjunction with each other for transporting the items. In an example, the remote-controlled personal cart system can be used for various applications such as shopping, hospitality, healthcare, and so forth. In this regard, the user may use the remote-controlled personal cart system for carrying various items while going shopping. Herein, the term item refers to any object that is required to be transported. For example, the item is a deliverable ordered by the user pursuant to a specific purchase. Optionally, the item is any belonging such as a shopping bag of the user. Optionally, the item is a grocery item such as bottles, flour packs, cans, and so forth.

The term *"cart"* as used herein refers to a wagon that is used for carrying a load from one place to another. The cart has a definite shape such as a cuboidal shape, a cubicle shape, a trapezoidal shape, a spherical shape, and so forth. In an example, the cart has a cuboidal shape. Moreover, the cart has a definite size. Optionally, the size of the cart is customized based on an application thereof. Optionally, the cart is fabricated in three standard sizes such as small, medium and large. Optionally, the small size cart has a length of 45 cm, a width of 35 am and a height of 35 cm. Optionally, the medium size cart has a length of 70 cm, a width of 55 cm and a height of 55 cm. Optionally, the large size cart has a length in a range of 90cm to 100 cm, a width in a range of 70 cm to 80 cm and a height in a range of 70 cm to 80 cm. For example, when the cart has the cuboidal shape then the length of the cart is from 0.6 meters (m) up to 1 m, breadth of the cart is from 0.6 m up to 1 m and a height of the cart is from 0.15 m up to 0.8 m. Furthermore, the cart may carry a load of up to 60 kilograms (kg). Optionally, the cart is a shopping cart. Optionally, the cart may be used at home, a hospital, a restaurant, a hotel, an office, a workshop, and so forth. It will be appreciated that the cart is compact in size. Moreover, the compact size of the cart makes it efficient to carry a personal payload.

The cart comprises a base that is arranged at the bottom portion of the cart. The term *"base"* as used herein refers to a chassis or a load-bearing framework of the cart. In this regard, the base provides structural support to the cart in the construction and function thereof. Moreover, the base includes several components that are arranged thereon. It will be appreciated that the said components work in conjunction with each other to provide power to the system.

The base comprises at least four wheels comprising at least two driving wheels on the front and at least two back wheels. In this regard, the cart comprises four wheels such that the two wheels are arranged at the front and the remaining two are arranged at the back of the cart. It will be appreciated that the at least two wheels on the front are drive wheels. The drive wheel transmits force, transforming torque into tractive force from the at least two wheels on the front to the road, thereby causing the system to move forwards or backward. Optionally, the at least four wheels are drive wheels. Advantageously, the at least four wheels possess a large diameter in order to drive smoothly on rough pedestrian ways. Optionally, the diameter of the wheels lies in a range between 7.2 cm to 12 cm. Optionally, the diameter of the wheels is customized based on the size of the cart. Beneficially, the at least four wheels are used to keep the cart stable and operable on various urban terrains. Moreover, presence of the at least four wheels keeps the design of the cart simple such that the cart could move easily in populated spaces. Furthermore, each of the at least four wheels is suitable for driving on different road surfaces under varying climate conditions.

Optionally, the at least four wheels are exchangeable. In this regard, each of the at least four wheels could be changed based on a condition (such as wear and tear) thereof. Optionally, the at least four wheels comprises solid tires in order to prevent thereof from puncturing. Moreover, the at least four wheels enable the cart to be in contact with the surface. It will be appreciated that the at least four wheels are durable and possess an optimum grip. Furthermore, each of the at least four wheels could be changed based on a weather condition or the surface thereof.

The base comprises at least one supporting wheel configured to support the cart, when driving on an uneven ground. In this regard, the base includes the at least one supporting wheel in the front or the back portion of the base. It will be appreciated that the at least one supporting wheel is used to prevent the cart from falling over. Advantageously, the at least one supporting wheel is used to enable the cart to climb an edge of a sidewalk smoothly or efficiently.

The at least one supporting wheel is located in at least one location selected from between the at least two driving wheels or between the at least two back wheels. In this regard, the at least one supporting wheel is arranged between the at least two driving wheels to keep the cart stable while climbing an obstacle such as a stone on the surface. Moreover, the at least one supporting wheel is arranged between the at least two wheels that are arranged at the back of the base of the cart.

The base comprises a battery. The battery unit is a source of electric power, herein installed within the base of the cart for powering thereof. Optionally, the battery may be a 120 watt battery. It will be appreciated that the base comprises a single battery in order to keep the cart light.

Optionally, the battery unit may be a primary battery unit and a secondary battery unit. The primary battery unit is designed to be used until it is exhausted of energy then discarded as the chemical reactions in the primary batteries are not reversible. The secondary battery unit may be recharged and used again multiple times as the chemical reactions therein may be reversed by applying electric current to the cell.

The system further comprises a charging station operable to charge the battery. Herein, the charging station refers to a charge point or a piece of equipment that supplies electrical power for charging plug-in electric vehicles. In this regard, the charging station supplies electrical power for charging the plugged-in cart. It will be appreciated that the charging station enables the efficient charging of the cart. Optionally, the charging station is an alternating current (AC) charging station or a direct current (DC) charging station. Optionally, the charging station is operable to charge the battery with the DC electric power, while most electricity is delivered from the power grid as the alternating current.

Optionally, the cart further comprises solar panels. The term *"solar panel"* as used herein refers to an assembly of photovoltaic cells mounted in a framework for generating energy. In this regard, the solar panels are mounted on the cart. Moreover, the solar panels use sunlight as a source of energy to generate direct current electricity. Optionally, the solar panels is arranged on the sides of the cart or on the lids. It will be appreciated that the solar panels save the energy and could operate for long hours.

The base comprises a receiver. The term *"receiver"* as used herein refers to a hardware module or device that is used to receive signals from an external device. In this regard, the receiver is used to receive the signal from a remote control device. In an example, the receiver is used to decode a piece of transmitted information that is obtained from the received signal.

The base comprises at least one motor. Optionally, the motor is an electric motor that converts electrical energy into mechanical energy. Moreover, the electric motors can be powered by the batteries. Typically, the at least one motor produces a linear force or a rotary force i.e., torque intended to rotate the driving part, such as the input shaft (or shaft), coupled to it. Typically, the motors are efficient, lightweight, robust, mechanically simple and cheap to manufacture. Furthermore, the at least one motor can provide instant and consistent torque at any speed and can run on electricity generated by renewable sources and do not or negligibly contribute to greenhouse effect. It will be appreciated that the motor is adequate to drive the cart. Preferably, the base of the cart employs the single motor in order to keep down the noise level.

The base comprises at least one sensor system operable to detect obstacles. The term *"sensor system"* as used herein refers to a group of sensors that are used to sense and navigate an operating environment of the cart. In this regard, the operating environment may be measured, continuously or intermittently, during the transportation of the items. Optionally, the at least one sensor system is operatively coupled with a software module to provide the sensor data thereto. Moreover, the at least one sensor system is configured to detect the obstacles and avoid collision therewith. In an example, the obstacles include an object, a construction, a living being, and so forth. Examples of the object include stones, bricks, vehicles, pedestrian signals, and so forth. Examples of the construction include walls, pillars, and so forth. Examples of living beings include animals, plants, pedestrian traffic, and so forth. Furthermore, the at least one sensor system is configured to provide location information about the system. Advantageously, the at least one sensor system enables the cart to prevent collision thereof when the signals received from the receiver are delayed or not transmitted. Optionally, the at least one sensor system is used to estimate the condition (such as wear and tear) of the cart. Optionally, the at least one sensor system includes a light sensor, sound sensor, a temperature sensor, and so forth.

Optionally, the at least one sensor system comprises at least one lidar. In this regard, the at least one lidar, in operation, emit light beams into the environment where they are present and receive reflections of the light beams off surfaces of obstacles present in the environment. Then, the reflections of the light beams are processed to generate point cloud data. Examples of the at least one lidar could be, but are not limited to, airborne Lidars, topographic Lidars, bathymetric Lidars, and terrestrial Lidars. In an example, the at least one lidar is used for examining the surface of the road or the path covered by the remote-controlled personal cart system for transporting items. It will be appreciated that the surface of the road is examined to avoid collisions of the cart with the obstacles.

Optionally, the at least one sensor system comprises. at least one of selected from time-of-flight (ToF) sensor, RGB sensor. The term *"time-of-flight sensor"* as used herein refers to a sensor that is used for measuring a time taken by an artificial light signal provided by a laser or an LED to travel a distance through a medium. In this regard, the time-of-flight sensor is used for measuring the time taken by the artificial light signal to travel the distance from the cart to the obstacle. The term *"RGB sensor"* as used herein refers to a color model in which the red, green, and blue primary colors of light are added to create different colors that are perceived by the sensor. The RGB sensor is used to deliver colored images of the obstacles by capturing light in red, green, and blue wavelengths.

The cart comprises a basket detachably placed on the base, the basket comprising an empty space configured to accommodate the items. In this regard, the basket is used to store or carry the items therein. Optionally, the dimensions of the basket are such that the basket fits properly onto the cart. Optionally, the basket is used to carry at least one shopping bag.

Optionally, the basket is a collapsible basket. The term *"collapsible basket"* as used herein refers to a foldable container that is used for carrying or storing objects. In this regard, the collapsible basket includes a bottom portion and a plurality of vertical sides or a plurality of walls. The number of vertical sides or walls depends on the shape of the basket. For example, a cuboidal-shaped basket may include four detachable or foldable walls and one bottom portion. Optionally, the collapsible basket is used to save some room while storing the objects. For example, the sides of the basket could be taken apart or the walls may be foldable. It will be appreciated that the collapsible basket reduces the size of the system, thereby making it easier to get stored.

Optionally, a material of the base and the basket comprises aluminium. In this regard, the base and the basket are fabricated using the aluminium material. Advantageously, the aluminium is a lightweight material, thus enables the cart to be lifted easily. Moreover, the aluminium is a durable material, thus makes the cart long-lasting. It will be appreciated that the aluminium material supports the cart to bear a heavy load. Optionally, the fabrication material of the base is a carbon steel to achieve a light-weight construction.

Optionally, the basket further comprises a handle and a screen operable to display an information about the detected objects. The term *"handle"* as used herein refers to a long metal bar or rod that is used for holding, carrying, or controlling a movement of the cart. In this regard, the handle may be a straight, circular, or a curled bar to enable handling of the cart. Optionally, the handle may have a polygonal shape such as a rounded-cuboidal shape, rounded-hexagonal shape, rounded-prism shape, and so forth. Optionally, the handle may be engraved with a knurled crosshatch pattern to enable users to maintain a solid grip. Moreover, the handle comprises an upper end and a lower end. The handle and the basket are supported by the base of the cart such that the handle is arranged in an upright position with respect to the surface. The base of the cart is mounted to the at least one wheels that allow the cart to move relative to the surface. Optionally, the handle is a retractable handle. The retractable handle is a collapsible handle such as a telescopic handle that could be extended and retracted from the back of the basket. In this regard, the retractable handle includes an internal mechanism that requires the handle to be pulled against a spring in order for an adjustment to take place, and once the adjustment is completed, the retractable handle locks into a rest position. Advantageously, the retractable handle increases the compactness of the cart.

The term *"screen"* as used herein refers to a flat panel on an electronic device on which images and information are displayed. In this regard, the screen is mounted on the upper end of the handle. The information includes a list of items or the objects present inside the basket. It will be appreciated that the screen eliminates the need of checking or counting the objects present in the basket manually. In an example, the screen makes it easier for the user to watch, which items are present in the basket without the need of looking into the basket. Optionally, the screen is used to display the total number of objects that are detected inside the basket, discount on the detected objects and a total bill amount of the detected objects. Furthermore, reduces the time that is required while the billing stage of the shopping.

The system further comprises a detector attached to the basket, the detector being operable to detect the objects inside the basket. The term *"detector"* as used herein refers to a device that is used to detect the presence of a particular object or substance. In this regard, the detector is operatively coupled to the basket for recognizing, counting and invoicing all the objects that are present inside the basket of the cart.

Optionally, the detector is operatively coupled to the screen. Optionally, the detector is used for sending the information regarding the detected objects to the screen. Beneficially, the detector eliminates the need of laying all the purchased items on a cash register counter, thus saving the time of the user and the seller. Moreover, the detector and the screen work in conjunction with each other to prevent errors that occur during the billing of the detected objects.

The term *"remote-control device"* as used herein refers to an electronic device that is used to operate another device from a distance or wirelessly, such as through microwave signals with 2.4GHz ISM bands. In this regard, the remote-control device is used for controlling the movement of the cart. The movement includes a forward, a backward, a rotating, or a turning motion of the cart. The speed (v1) of that cart refers to the distance travelled by the cart in a unit of time. The SI unit for measuring the speed (v1) of the cart is meter per second (m/s). Optionally, the remote-control device is a tilt control device. The term *"tilt control device"* as used herein refers to an input device that pivots on a base and reports its angle or direction to the cart. In this regard, the tilt control device does not require buttons for controlling the angle or the direction of the cart. It will be appreciated that the tilt control device transmits instructions to the cart regarding the movement thereof by tilting the tilt control device in the desired manner. In an example, the tilt control device is moved into a sloping position in order to move or cause to move the cart into the sloping position by turning thereof.

The remote-control device comprises a transmitter and at least one sensor element operable to measure a distance (L) between the remote-control device and the cart. The term *"transmitter"* as used herein refers to an electronic component of the remote-control device and is used for transmitting a command in the form of signals to the receiver associated with the cart. Optionally, the command is transmitted in the form of a stream of pulses of infrared light. Optionally, the remote-control device includes a plurality of buttons. Optionally, the receiver in the cart recognizes the pattern and causes the cart to move accordingly. Optionally, the transmitter is a light-emitting diode (LED) that is built into the remote-control device. It will be appreciated that the remote-control device employs the transmitter for increasing the efficiency of the cart while transporting the items. In an example, the remote-control device is used to command the cart to be driven towards the shelf when the user requires to select heavy-weight items from a shelf of the store.

The remote-control device is operable to control the speed of the cart to keep the distance (L) within a range from 1 meter (m) up to 3 meters during the movement of the cart. In this regard, the remote-control device is a hand-held device that is used by the user in order to maintain an optimum distance between the remote-control device and the cart. It will be appreciated that the speed is selected based on the moving pace of the user controlling the remote-control device. Moreover, the range from 1 meter up to 3 meters prevents the user from stumbling on the cart when the distance is less than 1 metre. Additionally, the aforementioned range of the distance prevents the cart from hitting the pedestrian traffic, thereby allowing efficient control thereof. Optionally, the distance is in the range from 1.0 m, 1.5 m, 2.0 m, or 2.5 m up to 1.5 m, 2.0 m, 2.5 m or 3.0 m.

Optionally, the speed (v1) is controlled according to a speed (v2) of a user holding the remote-control device. In this regard, the remote-control device is used to manipulate the speed of the cart based on the user's speed. In an example, when the user holding the remote-control device starts moving faster, then the cart also drives faster or vice versa. It will be appreciated that there is no need to pre-define the speed (v1) on the remote control device.

Optionally, the basket comprises a lid and wherein the lid can be opened and closed via the remote-control device. The term *"lid"* as used herein refers to a cover of a container that serves as a closure or a seal. In this regard, the lid is used to cover or close the basket completely. Optionally, the lid includes a security strip or a tamper-evident band to hold the lid on securely until the opening is desired or authorized. It will be appreciated that the lid protects the items stored in the basket. Moreover, the lid could be locked to avoid any losses or robbery of the items stored inside the basket. Optionally, the basket could also operate without the lid.

### DETAILED DESCRIPTION OF DRAWINGS

Referring to FIGs. 1A, 1B, 1C and 1D, there are shown schematic illustrations of a remote-controlled personal cart system **100** for transporting items, in accordance with an embodiment of the present invention. The system **100** comprises a cart **102** comprising a base **104** comprising at least four wheels **106A, 106B, 106C** and **106D.** As shown in FIG. 1A, the base (not shown) comprises at least two driving wheels such as a first driving wheel **106A** on the front and at least two back wheels such as a first back wheel **106C.** Moreover, the base comprises at least one supporting wheel **108** that is configured to support the cart **102,** when driving on an uneven ground. Furthermore, the base comprises a basket **110** detachably placed on the base, the basket **110** comprises an empty space that is configured to accommodate the items. As shown in FIG. 1B, the base **104** comprises at least four wheels such as **106A, 106B, 106C** and **106D** comprising at least two driving wheels such as **106A** and **106B** on the front and at least two back wheels such as **106C** and **106D.** Moreover, the base **104** comprises at least one supporting wheel **108** that is configured to support the cart (not shown), when driving on an uneven ground. Furthermore, the base **104** comprises a battery **112,** a receiver **114,** at least one motor **116,** and at least one sensor system **118** operable to detect obstacles. As shown in FIG. 1C, the cart **102** is detached from the basket (not shown) based on an application thereof. As shown in FIG. 1D, a zoomed view of the at least one supporting wheel **108.**

As shown in FIG. 1E, the basket **110** further comprises a handle **120** and a screen **122** operable to display an information about the detected objects (not shown). The remote-controlled personal cart system **100** further comprises a charging station **124** operable to charge a battery (not shown).

## Claims

1. A remote-controlled personal cart system (100) for transporting items, the remote-controlled personal cart system comprising
- a cart (102) comprising
- a base (104) comprising
- at least four wheels (106A, 106B, 106C, 106D) comprising at least two driving wheels (106A, 106B) on the front and at least two back wheels (106C, 106D),
- at least one supporting wheel (108) configured to support the cart, when driving on an uneven ground, wherein the at least one supporting wheel is located in at least one location selected from between the at least two driving wheels or between the at least two back wheels,
- a battery (112),
- a receiver (114),
- at least one motor (116), and
- at least one sensor system (118) operable to detect obstacles;
- a basket (110) detachably placed on the base, the basket comprising an empty space configured to accommodate the items; and
- a remote-control device for controlling a movement and a speed (v1) of the cart, the remote-control device comprising a transmitter and at least one sensor element operable to measure a distance (L) between the remote-control device and the cart,
and wherein the remote-control device is operable to control the speed of the cart to keep the distance (L) within a range from 1 meter up to 3 meters during the movement of the cart.

2. A remote-controlled personal cart system (100) according to claim 1 further comprising a detector attached to the basket (110), the detector being operable to detect the objects inside the basket.

3. A remote-controlled personal cart system (100) according to any of the preceding claims further comprising a charging station (124) operable to charge the battery (206).

4. A remote-controlled personal cart system (100) according to any of the claims 2 to 4, wherein the basket (110) further comprises a handle (120) and a screen (122) operable to display an information about the detected objects.

5. A remote-controlled personal cart system (100) according to any of the preceding claims, wherein a material of the base (104) and the basket (110) comprises aluminium.

6. A remote-controlled personal cart system (100) according to any of the preceding claims, wherein the cart (102) further comprises solar panels.

7. A remote-controlled personal cart system (100) according to any of the preceding claims, wherein the speed (v1) is controlled according to a speed (v2) of a user holding the remote-control device.

8. A remote-controlled personal cart system (100) according to any of the preceding claims, wherein the remote-control device is a tilt control device.

9. A remote-controlled personal cart system (100) according to any of the preceding claims, wherein the basket (110) comprises a lid and wherein the lid can be opened and closed via the remote-control device.

10. A remote-controlled personal cart system (100) according to any of the preceding claims, wherein the at least one sensor system comprises at least one of selected from ToF (Time of Flight) sensor, RGB sensor.

11. A remote-controlled personal cart system (100) according to any of the preceding claims, wherein the basket (110) is a collapsible basket.

12. A remote-controlled personal cart system (100) according to any of the claims from 4 to 11, wherein the handle (120) is a retractable handle.

13. A remote-controlled personal cart system (100) according to any of the preceding claims, wherein the at least one sensor system (118) comprises at least one lidar.

14. A remote controlled personal cart system (100) according to any of the preceding claims, wherein the at least four wheels (106A, 106B, 106C, 106D) are exchangeable.

## Patentansprüche

1. Ferngesteuertes persönliches Wagensystem (100) zum Transportieren von Gegenständen, das ferngesteuerte persönliche Wagensystem umfassend
- einen Wagen (102), umfassend
- ein Gestell (104), umfassend
- mindestens vier Räder (106A, 106B, 106C, 106D), umfassend mindestens zwei Antriebsräder (106A, 106B) an der Vorderseite und mindestens zwei Hinterräder (106C, 106D),
- mindestens ein Stützrad (108), das konfiguriert ist, um den Wagen zu stützen, wenn er auf einem unebenem Boden fährt, wobei sich das mindestens eine Stützrad an mindestens einer Stelle befindet, die aus zwischen den mindestens zwei Antriebsrädern oder zwischen den mindestens zwei Hinterrädern ausgewählt ist,
- einen Akku (112),
- einen Empfänger (114),
- mindestens einen Motor (116), und
- mindestens ein Sensorsystem (118), das betriebsfähig ist, um Hindernisse zu erkennen;
- einen Korb (110), der auf der Basis abnehmbar platziert ist, der Korb umfassend einen Leerraum, der konfiguriert ist, um die Gegenstände aufzunehmen; und
- eine Fernsteuerungsvorrichtung zum Steuern einer Bewegung und einer Geschwindigkeit (v1) des Wagens, die Fernsteuerungsvorrichtung umfassend einen Sender und mindestens ein Sensorelement, das betriebsfähig ist, um eine Entfernung (L) zwischen der Fernsteuerungsvorrichtung und dem Wagen zu messen,
und wobei die Fernsteuerungsvorrichtung betriebsfähig ist, um die Geschwindigkeit des Wagens zu steuern, um den Abstand (L) während der Bewegung des Wagens innerhalb eines Bereichs von 1 Meter bis zu 3 Metern zu halten.

2. Ferngesteuertes persönliches Wagensystem (100) nach Anspruch 1, ferner umfassend einen an dem Korb (110) angebrachten Detektor, wobei der Detektor betriebsfähig ist, um die Objekte im Inneren des Korbs zu erkennen.

3. Ferngesteuertes persönliches Wagensystem (100) nach einem der vorstehenden Ansprüche, ferner umfassend eine Ladestation (124), die betriebsfähig ist, um den Akku (206) zu laden.

4. Ferngesteuertes persönliches Wagensystem (100) nach einem der Ansprüche 2 bis 4, wobei der Korb (110) ferner einen Griff (120) und einen Bildschirm (122) umfasst, der betriebsfähig ist, um Informationen über die erkannten Objekte anzuzeigen.

5. Ferngesteuertes persönliches Wagensystem (100) nach einem der vorstehenden Ansprüche, wobei ein Material des Gestells (104) und des Korbs (110) Aluminium umfasst.

6. Ferngesteuertes persönliches Wagensystem (100) nach einem der vorstehenden Ansprüche, wobei der Wagen (102) ferner Solarmodule umfasst.

7. Ferngesteuertes persönliches Wagensystem (100) nach einem der vorstehenden Ansprüche, wobei die Geschwindigkeit (v1) gemäß einer Geschwindigkeit (v2) eines Benutzers gesteuert wird, der die Fernsteuerungsvorrichtung hält.

8. Ferngesteuertes persönliches Wagensystem (100) nach einem der vorstehenden Ansprüche, wobei die Fernsteuerungsvorrichtung eine Neigungssteuerungsvorrichtung ist.

9. Ferngesteuertes persönliches Wagensystem (100) nach einem der vorstehenden Ansprüche, wobei der Korb (110) einen Deckel aufweist und wobei der Deckel über die Fernsteuerungsvorrichtung geöffnet und geschlossen werden kann.

10. Ferngesteuertes persönliches Wagensystem (100) nach einem der vorstehenden Ansprüche, wobei das mindestens eine Sensorsystem mindestens eines umfasst, das aus ToF(Flugzeit)-Sensor, RGB-Sensor ausgewählt ist.

11. Ferngesteuertes persönliches Wagensystem (100) nach einem der vorstehenden Ansprüche, wobei der Korb (110) ein zusammenklappbarer Korb ist.

12. Ferngesteuertes persönliches Wagensystem (100) nach einem der Ansprüche 4 bis 11, wobei der Griff (120) ein einziehbarer Griff ist.

13. Ferngesteuertes persönliches Wagensystem (100) nach einem der vorstehenden Ansprüche, wobei das mindestens eine Sensorsystem (118) mindestens ein Lidar umfasst.

14. Ferngesteuertes persönliches Wagensystem (100) nach einem der vorstehenden Ansprüche, wobei die mindestens vier Räder (106A, 106B, 106C, 106D) austauschbar sind.

## Revendications

1. Système de chariot personnel télécommandé (100) permettant de transporter des articles, le système de chariot personnel télécommandé comprenant
- un chariot (102) comprenant
- une base (104) comprenant
- au moins quatre roues (106A, 106B, 106C, 106D) comprenant au moins deux roues motrices (106A, 106B) à l'avant et au moins deux roues arrière (106C, 106D),
- au moins une roue de support (108) conçue pour supporter le chariot lorsqu'il roule sur un sol irrégulier, dans lequel l'au moins une roue de support est située à au moins un emplacement choisi entre les au moins deux roues motrices ou entre les au moins deux roues arrière,
- une batterie (112),
- un récepteur (114),
- au moins un moteur (116), et
- au moins un système de capteurs (118) pouvant détecter des obstacles ;
- un panier (110) placé de manière amovible sur la base, le panier comprenant un espace vide conçu pour accueillir les articles ; et
- un dispositif de commande à distance pour commander un déplacement et une vitesse (v1) du chariot, le dispositif de commande à distance comprenant un émetteur et au moins un élément de capteur pouvant mesurer une distance (L) entre le dispositif de commande à distance et le chariot,
et dans lequel le dispositif de commande à distance peut commander la vitesse du chariot pour maintenir la distance (L) dans une plage comprise entre 1 et 3 mètres pendant le déplacement du chariot.

2. Système de chariot personnel télécommandé (100) selon la revendication 1, comprenant en outre un détecteur attaché au panier (110), le détecteur pouvant détecter les objets à l'intérieur du panier.

3. Système de chariot personnel télécommandé (100) selon l'une quelconque des revendications précédentes, comprenant en outre une station de charge (124) pouvant charger la batterie (206).

4. Système de chariot personnel télécommandé (100) selon l'une quelconque des revendications 2 à 4, dans lequel le panier (110) comprend en outre une poignée (120) et un écran (122) pouvant afficher des informations concernant les objets détectés.

5. Système de chariot personnel télécommandé (100) selon l'une quelconque des revendications précédentes, dans lequel un matériau de la base (104) et du panier (110) comprend de l'aluminium.

6. Système de chariot personnel télécommandé (100) selon l'une quelconque des revendications précédentes, dans lequel le chariot (102) comprend en outre des panneaux solaires.

7. Système de chariot personnel télécommandé (100) selon l'une quelconque des revendications précédentes, dans lequel la vitesse (v1) est commandée selon une vitesse (v2) d'un utilisateur tenant le dispositif de commande à distance.

8. Système de chariot personnel télécommandé (100) selon l'une quelconque des revendications précédentes, dans lequel le dispositif de commande à distance est un dispositif de commande à inclinaison.

9. Système de chariot personnel télécommandé (100) selon l'une quelconque des revendications précédentes, dans lequel le panier (110) comprend un couvercle et dans lequel le couvercle peut être ouvert et fermé par l'intermédiaire du dispositif de commande à distance.

10. Système de chariot personnel télécommandé (100) selon l'une quelconque des revendications précédentes, dans lequel l'au moins un système de capteurs comprend au moins l'un parmi un capteur ToF (temps de vol) ou un capteur RVB.

11. Système de chariot personnel télécommandé (100) selon l'une quelconque des revendications précédentes, dans lequel le panier (110) est un panier pliable.

12. Système de chariot personnel télécommandé (100) selon l'une quelconque des revendications 4 à 11, dans lequel la poignée (120) est une poignée rétractable.

13. Système de chariot personnel télécommandé (100) selon l'une quelconque des revendications précédentes, dans lequel l'au moins un système de capteurs (118) comprend au moins un lidar.

14. Système de chariot personnel télécommandé (100) selon l'une quelconque des revendications précédentes, dans lequel les au moins quatre roues (106A, 106B, 106C, 106D) sont interchangeables.
